# EUROPEAN PATENT APPLICATION

(11) **EP 4 721 901 A1**
(43) Date of publication of application: **08.04.2026**
(21) Application number: 26158192.0
(22) Date of filing: 10.05.2023
(51) Int. Cl.: B23D 59/00, B41J 3/407, B27N 3/02, B27N 3/04, B27N 3/18

(54) **A METHOD FOR PRODUCING BOARDS**

(30) Priority: 25.05.2022 EP 22175319
(62) Divisional of application: 23727887.4
(71) Applicant: Unilin, BV, 8710 Wielsbeke (BE)
(72) Inventor: Duquesne, Youri, 8710 Wielsbeke (BE); Maenhaut, Arne, 8710 Wielsbeke (BE); Schaubroeck, Xavier, 8710 Wielsbeke (BE); Houzet, Joachim, 8710 Wielsbeke (BE); Claerhout, Sven, 8710 Wielsbeke (BE)
(74) Representative: Unilin Technologies

(57) **Abstract**

A method for producing boards, wherein raw material (6) is provided and production steps are performed to obtain said boards, with half products formed during said production steps, wherein the productions steps comprise at least the following production steps:
-a basic step wherein at least said raw material (6) is transported to a shaping unit (1);
-a shaping step, wherein said raw material (6) is formed into plate shaped material to form a plate shaped half product (7);
-a sawing step wherein said plate shaped half product (7) is sawn to board shaped half products (8);
wherein these board shaped half products (8) are formed into respective boards, wherein, a number of boards is linked to a respective ID tag or comprises a respective ID tag, wherein said ID tags comprise individual data about parameters relating to production steps of said respective boards.

## Description

The present invention relates to a method for producing boards, wherein raw material is provided and production steps are performed to obtain said boards, with half products formed during said production steps, wherein the productions steps comprise at least the following production steps:
- a basic step wherein at least said raw material is brought together and transported to a shaping unit;
- a shaping step, wherein said brought together raw material is formed into plate shaped material by said shaping unit to form a plate shaped half product;
- a sawing step wherein said plate shaped half product is sawn or cut by a sawing unit to board shaped half products;
wherein these board shaped half products are formed into respective boards.

This invention preferably relates to boards, such as particle boards, oriented strand boards (OSB) and fiber boards, for example wood fiber boards such as MDF (medium-density fiberboard) or HDF (high-density fiberboard) or plant fiber boards such as flax board or hemp boards. This invention can also relate to boards comprising a wood-based substrate, such as a particle board or a wood fiber board, or a thermoplastic substrate or a mineral based substrate, and a decorative layer, wherein said boards can be floorboards, furniture boards or wall boards. This decorative layer can comprise one or several paper layers impregnated with a resin and/or a timber layer and/or thermoplastic layers and/or other layers. This invention also relates to rigid insulation panels such as polyurethane/polyisocyanurate panels (PUR/PIR panels) or mineral based boards or thermoplastic boards.

In the production of boards, there is always a certain amount of boards that do not meet the predetermined quality requirements, such that there is always a certain fall-out. The production of said boards takes place during several production steps, such that is difficult to determine why certain boards do not meet the predetermined quality requirements. The quality is the result of several parameters, being amongst other parameters with regard to the characteristics of the used raw material, production parameters relating to the environment, such as temperature and humidity, production parameters with regard to the production steps, for example the pressing conditions if the shaping step requires the use of a pressing device. Often the reason for inferior quality is not caused by one bad parameter, but often it is a combination of several kind of parameters. Therefore, it is not simple to reduce fall-out. If said boards are produced in a continuous manner, it is also desirable that one can make a product change between different types of boards, for example between thicker and thinner boards or vice versa, without the need to shut down the production and without a large amount of unsuitable boards caused by said product change.

Since it is difficult to determine what exactly causes fall-out, it also difficult to reduce said fall-out. It is difficult to find the specific causes why the required quality is not always obtained. Fall-out can be reduced by lowering the production speed, but this is normally not desirable.

EP 08775808 and WO2021/165394 address the abovementioned problem, but there is still room for improvement.

It is therefore an object of the invention to provide an alternative method to produce said boards, which can reduce the fall-out.

This object is achieved by providing a method for producing boards, wherein raw material is provided and production steps are performed to obtain said boards, with half products formed during said production steps, wherein the productions steps comprise at least the following production steps:
- a basic step wherein at least said raw material is brought together and transported to a shaping unit;
- a shaping step, wherein said brought together raw material is formed into plate shaped material by said shaping unit to form a plate shaped half product;
- a sawing step wherein said plate shaped half product is sawn or cut by a sawing unit to board shaped half products;
wherein these board shaped half products are formed into respective boards, and wherein, at least during the production of said boards, a number of boards, and preferably each board, is linked to a respective ID tag or comprises a respective ID tag, wherein said ID tags comprise individual data about parameters relating to production steps of said respective boards.

Said ID tags comprise information about parameters of respective boards. These ID tags can for example be stored in an electronic device, such as a computer or said ID tags can for example be RFID tags or similar, such that said boards comprise their respective ID tag.

A number of boards, and preferably each board, has a respective ID tag, such that for these boards, board-individual information is present. If a said board does not meet the required quality characteristics, it can better be determined which parameters caused said inferior quality, this because board-individual information is present, which makes it easier in the future to optimize all the parameters and thus to reduce fall-out and/or to increase the production speed. By linking the correct parameters with the correct board, it is possible to find correlations with the desired quality. With this method, it is possible to link a specific board, with its parameters, even if said parameters were determined/measured/entered at an earlier time in the production process. For example, the quality of the board can be linked with characteristics of the raw material, with conditions of the processing steps, with environmental conditions. The optimalisation of said parameters can be performed with the aid of a computer, for example with the aid of an algorithm based on artificial intelligence. A learning model, for example a self-learning model, can thus be implemented in the method. Information about said parameters can also be displayed/communicated towards an operator, such that an operator can intervene on the basis of said parameters, if needed. This method allows determinations at board level, which can also be used for quality feedback during the production. Preferably more than 100 parameters, preferably more than 500 parameters are being used for each said board.

Since preferably a large number of parameters are being used, this can result in practice that almost each ID tag differs from other ID tags at least in one parameter.

This method allows at board level and during the production, direct quality feedback with regard to production conditions, as such making it possible to significantly limit fall-out and/or to increase production speed.

In said basic step said raw material is brought together and transported to a shaping unit. Said raw material may or may not be applied in layers. For example if the board comprises a particle board with 3 or more layers, layers comprising wood chips and glue, can be applied consecutively above each other, and then be transported as a whole to the shaping unit. Said board can also comprise a one-layer particle board or a whether or not single layered wood fiber board, comprising wood fibers and glue. Said raw material can also refer to a substrate layer, for example a wood based substrate such as MDF/HDF or particle board, and resin impregnated papers, if said board comprises said substrate and resin impregnated papers laminated on of the substrate. For the latter, the raw material can also refer to the wood chips/wood fibers and the glue, to form said MDF/HDF or particle board substrate.

In a preferred embodiment the shaping step comprises a pressing step and the shaping unit comprises a pressing device, such as a continuous press. The shaping unit can also comprise a prepressing device, as such that the pressing by the pressing device can be performed more smoothly. Said prepressing device and pressing device may or may not be part of the same machine. The board can here for example be a particle board, which may or may not be laminated with for example one or more impregnated paper layers. The particle board can thus for example be a raw particle board or a melamine faced particle board. The board can also be a wood fiber board, such as MDF or HDF, which may or may not be laminated with for example one or more impregnated paper layers or for example a timber layer. With the aid of such a method, boards with a sufficient quality are produced, which may or may not be used in further production steps to produce for example floor panels, wall panels or furniture panels.

In another embodiment, the shaping step takes place in a production line which forms rigid polyurethane foam or rigid polyisocyanurate foam between preferably two facers, said facers comprising for example aluminum foil and/or kraft paper.

This method can also have a further step of removing half products and/or boards which do not meet a certain standard. This means that half products with inferior characteristics can be removed during production. For example, after the sawing step, board shaped half products can be removed if they do not meet a minimum standard. This is done for example with the aid of one or more measuring devices, which allow to check whether minimum standards are met.

In a preferred embodiment, during the production of said boards, said half products, such as the board shaped half products, corresponding to boards that are linked to said ID tags or comprise said ID tags, are also linked to said respective ID tags or comprise said respective ID tags, with the ID tags preferably being updated during the production. This means that said boards are already being followed during the production, with said ID tags preferably being updated during said production. In this manner, the data of the parameters in said ID tags can be very accurate and correct, such that each board is linked to correct information and fall-out can be better reduced and/or the production speed can be increased. Since the half products are already linked to said ID tags or comprise said ID tags, it also possible to alter/adapt the production based on the information of said ID tags and as such actively reduce fall-out. For example, based on the raw material parameters and/or environmental conditions, the pressing conditions, for example the temperature, the pressure, the time, etc. can be altered, such that the pressing conditions are optimally adapted to the said parameters and conditions, and this preferably during the entire production. This can be done with the aid of a (self-learning) model. Some of said parameters of said ID tags can also be visualized/communicated, for example visualized on a production screen, such that an operator can alter settings of the process during the production, based on said parameters. Further with the aid of said parameters and a model, it is also possible to visualize predictions with regard to said parameters in the near future, such that the operator can alter settings of the process during the productions based on said predictions. Preferably a combination of the above is possible, were a (self-learning) model is used to optimize the production and wherein an operator can still interfere when needed. With half products corresponding to a respective board can be meant one of the following: one half product forms one board or one part of a half product forms one board. For example the said plate shaped half product can be continuously formed and cut into board shaped half products, meaning that consecutively parts of said plate shaped half product can each lead to one board shaped half product and each board shaped product can lead to one board.

In a very preferred embodiment said parameters comprise parameters from the group comprising: parameters with regard to shaping conditions during the shaping step, for example the pressing conditions if said shaping step comprises a pressing step, parameters with regard to the raw material, parameters with regard to the environmental conditions, parameters with regard to other production step conditions, measured values of raw material, measured values of half products, measured values of boards. For example one or more of the following parameters are possible: moisture content of the wood chips/wood fibers, the wood mix being for example the amount of wood chips/wood fibers from certain hardwood and/or certain softwood, the particles sizes of the wood chips, glue type, glue amount, amount of hardener, glue concentration (water versus solid glue content), glue mix if different types of glue are used, injection glue pressure, backpressure in glue/wood mixtures, waiting time in the scatterers, moisture added to the wood chips/wood fibers, pressure of the pre press if present, amount of steam injected if steam is used, thickness between pressure elements at specific locations, etc. For example said parameters can comprise certain input values, which are for example entered by the operator in the production system or by automatization, for example the desired thickness of the panels, the amount of glue used, the type of glue used, the type of used wood chips/wood fibers, etc. The glues used can be one or more of the following list: aminoplast polymer glues such as urea formaldehyde glues, melamine urea formaldehyde glues or melamine formaldehyde phenolic glues; polyvinyl acetate glues; polyurethane glues; poly acrylate glues; polymeric methylene difenyl diisocyanate glues; polyvinyl butyral (PVB) glues; polyurethane (PUR) hotmelts; polyester glues; bio-based glues based on for example sugars, lignin, hyper branched polyamides, etc.; it is not excluded that the glue contains an additional hardener to improve the bonding, such hardener can be based on for example isocyanates, carbodiimides, aziridine, epoxy, etc.

The said parameters can also comprise measured values, for example measured values with regard to the environmental conditions, such as the temperature and the humidity, or for example measured values of the raw material, for example the moisture content or the pH, measured values of the half products, and measured values of the boards, wherein said measured values can relate to the characteristics of the raw material and to the quality such as the amount of chipping, the thickness and/or the density and/or the strength of said boards, etc. To measure characteristics, sensors and/or cameras can be used. It is possible to measure characteristics during production, thus online, and/or to measure characteristics for example in a lab. One could for example measure characteristics of the glue, wood chips or wood fibers before using it in production and/or one could measure characteristics of the board, after its production and/or one could take out a number of half products during the production to measure characteristics of said half products. Parameters with regard to pressing conditions are for example the temperature, the pressure, the pressing time, the change of parameters during the pressing, etc. Other parameters can relate to the scatter conditions of the raw material, if for example the raw material comprises wood particles such as wood chips, the distribution of said raw material in the basic step, the processing time of said raw material in the scattering devices, etc.

Preferably one or several measuring devices are used to measure characteristics of the raw material and/or the half products and/or boards, wherein said characteristics are added as parameters to respective ID tags. With the aid of said measuring devices, it is possible to link the quality of the end product, with other production parameters, such that it can be determined what exactly causes fall-out and the production can be optimized. This optimalisation can or cannot be performed with the aid of a self-learning model and/or artificial intelligence. The used models can be neural networks, multi linear models, etc. Said measuring devices are then preferably capable of sending signals, such that said ID tags can be updated accordingly. For example the ID tags are stored in an electronic device, such as a computer, wherein said measuring device are for example capable of sending signals to said electronic device, for example wirelessly, such that the ID tags can immediately be updated with the information obtained by said measuring devices.

In a very preferred embodiment, for the basic step, one or several transporting devices, such as transporting belts, are used to transport the said raw material, wherein at fixed places measuring points are present to measure parameters of said raw material, with the measuring intervals based on the transport speed of the transporting devices and with ID tags being linked to their corresponding measured parameters. Values of the raw material are in this preferred embodiment measured at two or more fixed places, therefore several parameters of said raw material, obtained at several places, are present in said ID tags, such that said ID tags comprise very accurate information about said raw material. Since the raw material is known very well, the further production steps can be tailored to said information, so that possible fall-out can be limited and/or the production speed can be increased. In this embodiment, the change of speed will not result in ID tags comprising incorrect information, being information relating to other boards, since the measuring intervals are based on the transport speed, such that the measured parameters can always be placed into the correct ID tag. Further also preferably, for the pressing step, also fixed measuring points are present, and this because preferably the speed during the pressing step is similar to or the same as the transport speed of the one or several transporting devices used for the basic step.

Further preferably several measuring points are present at constant distance intervals, wherein the time intervals for measuring at said measuring points are chosen based upon the distance moved by said one or several transport devices, with said latter distance corresponding to said distance intervals. This allows to easily link measured parameters with the correct board, thus with the correct ID tag. For example, one can establish were the raw material resulting in a specific board, was at a certain time, such that, with the aid of this embodiment, one can link the measured parameters with the correct ID tags.

Here below a possible way to measure parameters of said raw material at fixed places in the production of particle boards (chipboards), is described. The production line where the particle boards are made, is a long continuous system comprising one or multiple belts. These belts transport the raw material, being a mixture of at least wood chips and glue, to a press, preferably a continuous hot belt which may or may not provide prepressing, in which said raw material is pressed at an elevated temperature, at a certain pressure and during a certain time, to form a plate shaped material. This plate shaped material is then later on cut into board shaped half products by a sawing unit, and said board shaped half products are then further processed into particle boards. The speed of the belts, which are used to transport the plate shaped material to the sawing unit is preferably constant, such that one can easily cut board shaped half products with the same length and this by cutting at constant intervals. Measurements can here be easily done at fixed constant time intervals and one can easily link the measured parameters with the correct board. The speed of the belts that are used to transport the raw material can however change. Instead of measuring at a fixed time intervals and counting back a variable amount of timesteps depending on the speed, it was found that it is better to base the measuring intervals on a certain distance moved by the belts, thus at fixed constant distance intervals, thus at fixed places. For example for every 1 to 5 meters movement of the belt, for example 3 meter movement of the belt, one can measure parameters. This means that the frequency of signals depends on the speed of the belt, if the belts speed up, the frequency increases and vice versa. To link the correct parameters to the board, there is then a virtual division of the production line into pieces of said length intervals. For example if the belt line itself is about 140 m long from start to finish, and one has measuring points every 3 meters, this means that the belt line is divided in about 46 different 3 m parts. The ID tag of every board can here be easily linked to the correct parameters measured with the different measuring points by linking how many measurements ago, the raw material was at which measuring point.

In a very preferred embodiment the productions steps comprise at least one identification step, wherein one or more marking elements are applied during said identification step, and wherein said marking elements are linked to said ID tags or comprise said ID tags. By providing said marking elements, it is assured that the boards and/or half products are linked to the correct ID tag. Said marking elements can be read, so one can easily determine the parameters of said board and/or half product. Preferably a detecting and/or reading device (reader) is needed to read the marking elements. The parameters of said ID tags are then not simply readable by looking at the marking element. The result is that an ID tag can comprise lots of parameters, for example more than 100, preferably more than 200 or even more then 500 parameters. The marking element can for example be a printed ID code and by scanning said ID code, lots of information can be obtained. With the aid of said marking elements, there less risk that the ID tag gets updated incorrectly, this because if parameters are obtained, by for example measurement devices, one can read at the same time or shortly before or shortly after, the corresponding marking element, resulting in the update of the correct ID tag. It is easier to follow half products with a marking element and there is much more certainty that parameters end up with the correct ID tag. Often additional tests are done on some finished boards, samples of finished boards, to verify the quality of the production. With the aid of marking elements one can also easily link said test results with the correct ID tag. Test that can be performed on finished boards are for example tests with regard to swelling, bending strength, internal bond, modulus of elasticity, surface soundness, roughness, V100 internal bond, V313 swelling, density, sand content, test according to the perforator method ISO 12460 - 5, test according to the desiccator method: ISO 12460 - 4, test according to gas the analysis method: ISO 12460 - 3, test according to 1-cubic-metre chamber method: ISO 12460 - 1 etc. With the aid of marking elements, one can also easily link parameters, that were measured before the production, for example parameters of the raw material, and parameters that were measures after the production, and parameters that were measured during the production with the correct board and/or half product.

Further preferably, the method comprises a verification step, that takes place after or during the identification step, to control if the marking elements are applied in a correct way. For example if the marking element is an ID code or the like, in the verification step, a scanner is used to scan the applied ID code, to verify if the ID code was applied in a correct way.

Also further preferably the identification step takes place upon half products and wherein the ID tags, after the appliance of said marking elements, comprise data relating to production steps of respective half products, that took place prior to said identification step. Further, the ID tags preferably comprise data with regard to raw material parameters. Later on, if desired, novel information, for example parameters with regard to further production steps and/or quality of later formed corresponding half products and/or quality of the corresponding boards, can be added to said ID tags.

Also further preferably the production steps comprise at least one production step that takes place after said identification step, wherein said last mentioned production step comprises a substep of detecting and/or reading the marking elements and one or more subsequent substeps, wherein preferably, data relating to said last mentioned production step is added to the respective ID tag during said one or more subsequent substeps and/or wherein said one or more subsequent substeps are performed on the basis of the data of the corresponding ID tags. Said data relating to said last mentioned production step can comprise data relating to one or more substeps of said production step, for example of substeps performed after the substep of detecting and/or reading the marking elements. If substeps are performed before the substep of detecting and/or reading the marking elements, said data can also be added to the ID tag. A said production step can for example be the appliance of a decorative layer, such as a resin impregnated paper, to the board shaped half product. Preferably said production step then comprises a substep of detecting and/or reading the marking elements, such that the parameters of said board shaped half product are known and if needed, the further substeps are adapted to said parameters and/or further parameters with regard to the said production step and/or quality can be added to the correct ID tag.

Also further preferably said marking elements are machine readable. For example said marking elements can be optically readable. One or several production units used in the production can have components, such as readers, which are able to read said marking elements, such that said production units can add information to the correct ID tags and/or perform its production steps based upon the information stored in ID tags.

Also further preferably a said marking element is an ID code linked to said respective ID tag. For example the ID code can be a barcode, such as a data matrix barcode (2D barcode).

Further preferably the identification step is a printing step wherein ID codes are printed upon half products or upon boards, wherein preferably the ID codes are directly applied upon said half products or said boards, for example by direct printing or transfer printing. Said ID codes are preferably printed upon half products which already have a plate shape, and can for example be printed upon the upper side or the lower side of said half products. For example one can print the ID codes upon the plate shaped half products, thus before the sawing step. This is advantageous since the board can then be easily followed downstream from the shaping unit. One can also print the ID codes during or after the sawing step, such that the board shaped half products comprise a respective ID code. The latter is advantageous, since there is no risk that the ID codes (partly) disappear due to saw loss. If said ID codes are directly applied upon the half products, for example by direct printing or transfer printing, one does not first need to apply another layer such as a coating or a film. Said directly applied ID codes will not negatively influence the quality of said boards, such that said boards can be used in further production steps, for example production steps to form a floor panel, wall panel, furniture panel with such a board and a decorative layer. The ink used for said ID codes can be substantially invisible to the eye, such that it cannot cause visible defects. However the used ink can also be visible to the eye. The ink can be water based or solvent based. The ink can for example be a UV ink. Normally there is a time delay between the registering of the data and the generation of the ID code. To make sure the correct date is present in the ID tag and the ID code is linked to the correct ID tag, one or more of the following elements can be taken into account, when making use of a continuous production line to produce the board: the speed of the line, speed at different production units, changes in speed. Measurements can be done at certain time intervals and/or distance intervals. It is possible that in a further production step said printed ID code is no longer visible, for example if a decorative layer, such as a resin impregnated paper, is applied above said ID code.

In a preferred embodiment the said identification step takes place before, during or after the sawing step, such that board shaped half products comprise respective marking elements. For example the sawing unit can comprise a saw and a printer located behind said saw, seen in the direction of movement of the plate shaped half product. Preferably the distance between the saw and the printer is small, for example smaller than 1m, preferably smaller than 50 cm, such that the marking element is printed upon the board shaped product directly after the sawing and/or during the sawing and/or shortly before the sawing of said board shaped half product. This ensures that each board has an ID tag comprising the correct board individual data.

If the printing step takes place before the sawing step, said printing step can be performed in such a way that saw loss does not lead to board shaped half products without an ID code. For example, before the sawing step, the plate shaped half product is transported according to a length direction and said sawing step makes saw cuts substantially perpendicular to said length direction to produce boards of an average length X, wherein the saw loss for each cut is averagely a length Y, with Y being smaller than X, and wherein sets of one or several ID codes are printed consecutively, wherein the first printed ID codes of two consecutive sets of ID codes are printed at a distance from each other which corresponds substantially to the sum of lengths X and Y, and wherein preferably each set of ID codes comprises at least two ID codes, and said two ID codes are printed at a distance from each other at least corresponding to the length Y.

Also further preferably, the production steps comprise at least two said identification steps, with the identification steps being printing steps, and the production steps also comprising a sanding step, with the following sequence, whether or not immediately consecutive, a first said identification step wherein ID codes are printed upon half products, the sanding step, wherein half products are sanded to such extend that the ID codes, printed in the first identification step, are at least partially removed, and a second said identification step, wherein the ID codes are reprinted upon half products, such that obtained boards comprise respective ID codes. This way the boards can easily be followed throughout their production and this even before the sanding step. The risk that ID tags comprise incorrect information is very low in this embodiment. Preferably said identification steps take place respectively at a short distance from the sawing into board shaped half products and at a short distance from the sanding. With this it can be better ensured that the parameters of said ID tag are the correct parameters. For example the sawing unit comprises a saw and a printer located after said saw. For example the sanding unit comprises a printer to reprint said marking element.

In another embodiment the marking element comprises an ID tag, such as an RFID chip (Radio-frequency identification chip) or similar. The chip can be an active chip, a semi active chip or a passive chip. Active chips comprise a power source, such as a battery and may operate more than 100 meters from their readers. Active chips are more expensive and larger. Also it is not necessary that the chip operates at relatively large distances from the possible reading device. For marking elements, active chips are thus less interesting. Passive chips can have an electrical circuit/electrical wires, connected to the chip such that energy of the reading device can be transported to the chip. Preferably the dimensions of the marking elements are limited, such that further operations during use of the board, for example sawing of the boards for fitting in a furniture and/or forming an interior and/or applying screws, are not hindered by said marking elements.

Further preferably said marking elements are applied to the raw material in the basic step, wherein said raw material and said marking elements are transported to said shaping unit during said basic step, wherein said shaping unit forms said raw material with markings elements to said plate shaped material, wherein said plate shaped material extends according to a length direction, wherein said marking elements are applied to the raw material in said basic step in such a way that the marking elements in the plate shaped material extend successively one after the other according to the length direction.

Also further preferably, during the basic step, the raw material is applied upon a conveyor belt and marking elements are applied consecutively upon said conveyor belt as such to apply the marking elements in the raw material. For example the raw material and/or the marking elements can be scattered upon the conveyor belt.

In a preferred embodiment substantially each board is linked to a respective ID tag or comprises a respective ID tag. Fall-out can be strongly limited.

Preferably the boards are wood based board, such as a wood fiber board, an oriented stranded board (OSB) or a particle board. The wood fiber board can be MDF (medium density fiberboard) or HDF (high density fiberboard). Said wood-based boards can comprise a certain amount of recycled material. Said recycled material can be derived from solid wood waste, particle board waste, wood fiber board waste. Because with said method the input parameters and the measurement values of the raw material can be all added to the respective ID tags, the production can be well adapted to the raw material that is used, such that little fall-out is possible even if certain amounts of recycled raw material are used and/or even at increased production speeds. Also with this method one can more easily switch to bio-based glues, of which the product characteristics can have larger quality ranges, since the production can take into account the characteristics of the used bio-based glues to form good boards. This method therefore allows a more sustainable production.

Preferably the ID tags are generated and stored in an electronic device, such as a computer and/or in the marking element, when a said marking element comprising a said ID tag. This electronic device can then also be linked to other production facilities and/or to previous collected data, such that more data is available to reduce the possible fall-out and/or to increase the production speed. The electronic device can, for example, comprise a central processing unit and/or controller such as a chip and is capable of processing signals coming from production units into data. Said data can then be passed to/read into other production units.

In a preferred embodiment one or more production units are present to perform said productions steps, wherein a said production unit is capable of coupling to said ID tag. With coupling is meant putting information into the ID tag and/or reading information present in said ID tag.

Preferably at least one of the one or more production units are provided for sending signals to the electronic device relating to production parameters. Said signals are preferably sent wirelessly.

Also preferably at least one production unit comprises a measuring device for measuring product characteristics of half products and/or boards, and measured characteristics generated by said device are stored in respective ID tags.

In a preferred embodiment said ID tags comprise input values relating to productions steps, wherein said input values are preferably added by an operator which participates in the production of said boards.

With the intention of better showing the characteristics of the invention, herein below, as an example without any limitative character, an embodiment is described, with reference to the following schematic figure:

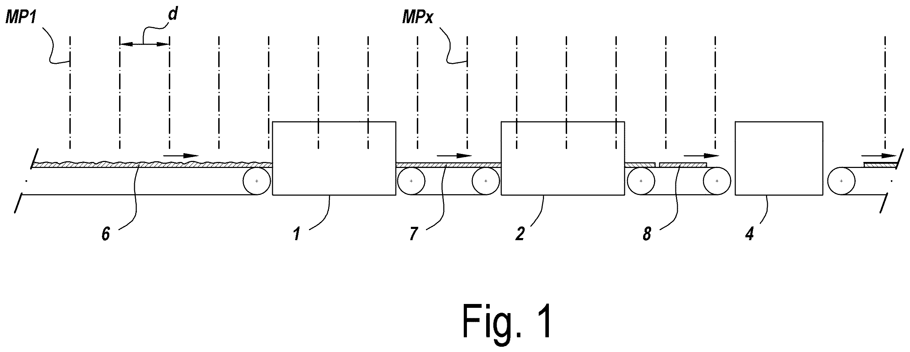

- figure 1 is a schematic view of part of a production line for particle boards.

The method according to the invention can be used to make particle boards. These particle boards can be raw particle boards or laminated particle boards. With the latter is preferably meant a board comprising a particle board substrate and a decorative layer comprising at least one resin impregnated paper, with said resin being for example a thermosetting resin such as melamine urea formaldehyde resin. The laminated particle board is then a melamine faced particle board. The decorative layer can also comprise two, three, for or more resin impregnated papers.

To produce such a particle board, a production line as partially and schematically represented in figure 1 can be used. In a first basic step, the raw material 6 is brought together upon one or several transporting belts. Said raw material 6 comprises wood chips and glue. If said particle board comprises three layers being two outer layer comprising fine chips and a central layer comprising more coarse chips, the basic step can be as following: fine chips with glue are scattered upon a said transporting belt and form a first layer, coarse chips with glue are scattered upon said first layer, and this for example in two substeps and as such form a second layer comprising for example two sublayers, fine chips with glue are scattered upon said second layer and form a third layer. Said layers which are situated on top of each other, are then transported to a pressing unit 1. Off course said particle board can also be a one-layer particle board, then one layer comprising wood chips and glue is transported to said pressing unit 1. In case a single layer MDF/HDF would be formed, one layer comprising wood fibers and glue is transported to said pressing unit 1. Said pressing unit 1 comprises a prepressing device, a pressing device and possible additional devices. In said pressing unit 1 said layers are pressed at an elevated temperature and thus during a certain time. The pressure and/or temperature fluctuates during the pressing. The result is a plate shaped material that extends according to a length direction and forms a plate shaped half product 7. This plate shaped half product 7 is transported to a sawing unit 2 comprising a saw, where said plate shaped half product 7 is sawn into board shaped half products 8 with a desired length by said saw. Further said sawing unit 2 comprises a first printer, located after the saw, which comprises for example one or several print heads, wherein said first printer prints a unique ID code upon each board shaped half product 8 and this during and or after the sawing with said saw into a said board shaped half product 8. Further the board shaped half product 8 comprising said unique ID code is transported to a sanding unit 4, which sands the upper surface of the board shaped half product 8 in such a way that the ID code is removed. The sanding unit 4 comprises a second printer which reprints said unique ID code. Further processing step are then carried out and the result is particle boards. If for example said further processing steps comprise the appliance of an impregnated paper layer, then laminated particle boards are formed.

Unique in this method is said unique ID code. Said ID code is linked to an ID tag stored in an electronic device, such as a computer, wherein said ID tag comprises more than 500 parameters relating to the specific production step of said respective board. To form said ID tags, the production line is designed in such a way that said parameters can be added to said ID tags during the production of said particle boards. Among others the production line comprises components which allow that input values can be added to said ID tags. For example an operator can enter values/characteristics of the used raw material 6, such as characteristics of the glue, characteristics of the used wood chips, characteristics of the particle board to be formed, such as for example the thickness, the strength, other dimensions, etc. Entering of said values may or may not be partially automated. Further said production line comprises several and different measuring components, such as sensors and/or camera's which can measures the desired parameters of for example the raw material 6, the production conditions, the quality and/or characteristics of half products, the quality and/or characteristics of the obtained boards. Said measuring components are set up in different places in the production line. For example there are measuring components to measure characteristics of the raw material 6 in the basic step, to measure the pressing conditions, to measure the quality of the half products, to measure the quality of the boards.

With the aid of said ID codes linked to ID tags, one can improve the production of particle boards to reduce fall-out and/or to increase production speed. For example one have a self-learning model that adapts the production based upon the parameters and this to reduce fall-out. Off course, it is of uttermost importance that said parameters are linked to correct ID tag, thus that said parameters are linked with the correct board. It is important that the ID tag linked to an ID code of a board, comprises information about the production of said specific board and not information about other boards which were produced in the same period.

For this the following is done:
In the basic step, the speed of the one or more transport belts can change during the production. Further preferably several measuring points MP1,...,MPx,... are present at constant distance intervals d, wherein the time intervals for measuring at said measuring points MP1,...,MPx,... are chosen based upon the distance moved by said one or several transport devices, with said latter distance corresponding to said distance intervals d. This allows to easily link measured parameters with the correct board, thus with the correct ID tag. For example, one can establish where the raw material 6 resulting in a specific board, was at a certain time, such that, with the aid of this embodiment, one can link the measured parameters with the correct ID tag. For this use is made of fixed measuring points MP1,...,MPx,... at constant distance intervals d, for example distance intervals d of +/- 3 meter, wherein measuring is done simultaneously for all said measuring points MP1,...,MPx,... at measuring intervals, wherein said measuring intervals are based upon the distance moved by said transporting belts, with said distance moved corresponding to said distance intervals d. Based on the speed during time, it is determined how many measurements ago the raw material 6 of a specific board was at which specific measuring point MP1,...,MPx,..., such that ID tag to which the ID code is linked comprises the correct parameters. Also it is determined which measurement done at the height of the pressing unit 1 and done at the sawing unit 2, relate to which board. As a result, the ID code printed by the first printer, is linked to a respective ID tag comprising the correct parameters of said board shaped half product 8. At the moment when the ID code is printed by said first printer, the corresponding ID tag comprises all the parameters that were determined/established before printing said ID code. Once said ID code is printed it is very easy to add additional parameters to the correct ID tag and it is no longer necessary to have measuring points MP1,...,MPx,... at constant distance intervals. Detecting/reading devices which read said ID codes are used in the following production steps, such that additional parameters are linked to the correct ID tags. Further with the aid of detecting/reading devices, one can easily perform additional productions steps based on the information of the ID tags corresponding to said half products, such that the production can be adapted/altered in real time, as such reducing fall-out.

In figure 1 measuring points MP1,...,MPx,... are schematically presented. Said method can specifically be used for a laminated particle board and this to reduce the amount of chipping. For this the amount of chipping is measured and a model is used which links several parameters to the amount of chipping.

The present invention is in no way limited to the herein above-described embodiment; on the contrary, such method can be realized according to various variants, without leaving the scope of the present invention, as defined by the appended claims.

The invention further relates to several embodiments as identified by the below numbered paragraphs.
1. A method for producing boards, wherein raw material 6 is provided and production steps are performed to obtain said boards, with half products formed during said production steps, wherein the productions steps comprise at least the following production steps:
   - a basic step wherein at least said raw material 6 is brought together and transported to a shaping unit 1;
   - a shaping step, wherein said brought together raw material 6 is formed into plate shaped material by said shaping unit 1 to form a plate shaped half product 7;
   - a sawing step wherein said plate shaped half product 7 is sawn or cut by a sawing unit 2 to board shaped half products 8;
   wherein these board shaped half products 8 are formed into respective boards, characterized in that, at least during the production of said boards, a number of boards, and preferably each board, is linked to a respective ID tag or comprises a respective ID tag, wherein said ID tags comprise individual data about parameters relating to production steps of said respective boards.
2. A method according to paragraph 1, wherein the shaping step comprises a pressing step and the shaping unit 1 comprises a pressing device, such as a continuous press.
3. A method according to paragraph 1 or 2, wherein, during the production of said boards, said half products, for example said board shaped half products 8, corresponding to said boards that are linked to said ID tags or comprise said ID tags, are also linked to said respective ID tags or comprise said respective ID tags, with the ID tags preferably being updated during the production.
4. A method according to any of the preceding paragraphs, wherein said parameters comprise parameters from the group comprising: parameters with regard to shaping conditions during the shaping step, parameters with regard to the raw material 6, parameters with regard to the environmental conditions, parameters with regard to other production step conditions, measured characteristics of half products, measured characteristics of boards.
5. A method according to any of the preceding paragraphs, wherein one or several measuring devices are used to measure characteristics of the raw material 6 and/or half products and/or boards, wherein said characteristics are added as parameters to respective ID tags.
6. A method according to any of the preceding paragraphs, wherein for the basic step, one or several transporting devices, such as transporting belts, are used to transport the said raw material 6, wherein at fixed places, measuring points MP1,...,MPx,... are present to measure parameters of said raw material 6, wherein the time intervals for measuring said parameters are based on the transport speed of the transporting devices, and with ID tags being linked to their corresponding measured parameters.
7. A method according to paragraph 6, wherein several measuring points MP1,...,MPx,... are present at constant distance intervals d, wherein the time intervals for measuring at said measuring points MP1,...,MPx,... are chosen based upon the distance moved by said one or several transport devices, with said latter distance corresponding to said distance intervals d.
8. A method according to any of the preceding paragraphs, wherein the productions steps comprise at least one identification step, wherein one or more marking elements are applied during said identification step, and wherein said marking elements are linked to said ID tags or comprise said ID tags.
9. A method according to paragraph 8, wherein the identification step takes place upon half products and wherein the ID tags, after the appliance of said marking elements, comprise data relating to production steps of respective half products, that took place prior to said identification step.
10. A method according to paragraph 8 or 9, wherein the production steps comprise at least one production step that takes place after said identification step, wherein said last mentioned production step comprises a substep of detecting and/or reading the marking elements and one or more subsequent substeps, wherein preferably, data relating to said last mentioned production step is added to the respective ID tag during said one or more subsequent substeps and/or wherein said one or more subsequent substeps are performed on the basis of the data of the corresponding ID tags.
11. A method according to any of the paragraphs 8 to 10, wherein said marking elements are machine readable.
12. A method according to any of the paragraphs 8 to 11, wherein a said marking element is an ID code linked to said respective ID tag.
13. A method according to paragraph 12, wherein the identification step is a printing step wherein ID codes are printed upon half products, wherein preferably the ID codes are directly applied upon said half products, for example by direct printing or transfer printing.
14. A method according to paragraph 13, wherein said identification step takes place before, during or after the sawing step, such that board shaped half products 8 comprise respective marking elements.
15. A method according to paragraph 13 or 14, wherein the production steps comprise at least two said identification steps, with the identification steps being printing steps, and the production steps also comprise a sanding step, with the following sequence, whether or not immediately consecutive, a first said identification step wherein ID codes are printed upon half products, the sanding step, wherein half products are sanded to such extend that the ID codes, printed in the first identification step, are at least partially removed, and a second said identification step, wherein the ID codes are reprinted upon half products, such that obtained boards comprise respective ID codes.
16. A method according to any of the paragraphs 8 to 11, wherein the marking element comprises an ID tag, such as an RFID chip.
17. A method according to paragraph 16, wherein marking elements are applied to the raw material 6 in the basic step, wherein said raw material 6 and said marking elements are transported to said shaping unit 1 during said basic step, wherein said shaping unit 1 forms said raw material 6 with markings elements, to said plate shaped material, wherein said formed plate shaped material extends according to a length direction, wherein said marking elements are applied to the raw material 6 in said basic step in such a way that the marking elements in the plate shaped material extend successively one after the other according to the length direction.
18. A method according to paragraph 16 or 17, wherein during the basic step the raw material 6 is applied upon a conveyor belt and the marking elements are also applied upon said conveyor belt as such to apply the marking elements in the raw material 6.
19. A method according to any of the preceding paragraphs, wherein substantially each board is linked to a respective ID tag or comprises a respective ID tag.
20. A method according to any of the preceding paragraphs, wherein the boards are wood based boards, such as wood fiber boards, oriented strand boards or particle boards.
21. A method according to any of the preceding paragraphs, wherein the ID tags are generated and stored in an electronic device, such as a computer.
22. A method according to any of the preceding paragraphs, wherein one or more production units are present to perform said productions steps, wherein a said production unit is capable of coupling to said ID tag.
23. A method according to paragraph 22, wherein at least one of the one or more production units are provided for sending signals to the electronic device relating to production parameters.
24. A method according to paragraph 22 or 23, wherein at least one production unit comprises a measuring device for measuring product characteristics of half products and/or boards, and measured characteristics generated by said device are stored in respective ID tags.
25. A method according to any of the preceding paragraphs, wherein said ID tags comprise input values relating to productions steps, wherein said input values are preferably added by an operator which participates in the production of said boards.

## Claims

1. A method for producing boards, wherein raw material (6) is provided and production steps are performed to obtain said boards, with half products formed during said production steps, wherein the productions steps comprise at least the following production steps:
- a basic step wherein at least said raw material (6) is brought together and transported to a shaping unit (1);
- a shaping step, wherein said brought together raw material (6) is formed into plate shaped material by said shaping unit (1) to form a plate shaped half product (7);
- a sawing step wherein said plate shaped half product (7) is sawn or cut by a sawing unit (2) to board shaped half products (8);
wherein these board shaped half products (8) are formed into respective boards, **characterized in that,** at least during the production of said boards, a number of boards, and preferably each board, is linked to a respective ID tag or comprises a respective ID tag, wherein said ID tags comprise individual data about parameters relating to production steps of said respective boards;
wherein the productions steps comprise at least one identification step, wherein one or more marking elements are applied during said identification step, and wherein said marking elements are linked to said ID tags or comprise said ID tags;
wherein the identification step takes place upon half products and wherein the ID tags, after the appliance of said marking elements, comprise data relating to production steps of respective half products, that took place prior to said identification step;
wherein the production steps comprise at least one production step that takes place after said identification step, wherein said last mentioned production step comprises a substep of detecting and/or reading the marking elements and one or more subsequent substeps, wherein said one or more subsequent substeps are performed on the basis of the data of the corresponding ID tags.

2. A method according to claim 1, wherein the shaping step comprises a pressing step and the shaping unit (1) comprises a pressing device, such as a continuous press.

3. A method according to claim 1 or 2, wherein, during the production of said boards, said half products, for example said board shaped half products (8), corresponding to said boards that are linked to said ID tags or comprise said ID tags, are also linked to said respective ID tags or comprise said respective ID tags, with the ID tags preferably being updated during the production.

4. A method according to any of the preceding claims, wherein one or several measuring devices are used to measure characteristics of the raw material (6) and/or half products and/or boards, wherein said characteristics are added as parameters to respective ID tags.

5. A method according to any of the preceding claims, wherein for the basic step, one or several transporting devices, such as transporting belts, are used to transport the said raw material (6), wherein at fixed places, measuring points (MP1,...,MPx,...) are present to measure parameters of said raw material (6), wherein the time intervals for measuring said parameters are based on the transport speed of the transporting devices, and with ID tags being linked to their corresponding measured parameters.

6. A method according to claim 5, wherein several measuring points (MP1,...,MPx,...) are present at constant distance intervals (d), wherein the time intervals for measuring at said measuring points (MP1,...,MPx,...) are chosen based upon the distance moved by said one or several transport devices, with said latter distance corresponding to said distance intervals (d).

7. A method according to any of the preceding claims, wherein data relating to said one production step that takes place after said identification step is added to the respective ID tag during said one or more subsequent substeps.

8. A method according to any of the preceding claims, wherein a said marking element is an ID code linked to said respective ID tag and wherein preferably the identification step is a printing step wherein ID codes are printed upon half products, wherein preferably the ID codes are directly applied upon said half products, for example by direct printing or transfer printing.

9. A method according to claim 8, wherein the production steps comprise at least two said identification steps, with the identification steps being printing steps, and the production steps also comprise a sanding step, with the following sequence, whether or not immediately consecutive, a first said identification step wherein ID codes are printed upon half products, the sanding step, wherein half products are sanded to such extend that the ID codes, printed in the first identification step, are at least partially removed, and a second said identification step, wherein the ID codes are reprinted upon half products, such that obtained boards comprise respective ID codes.

10. A method according to any of the claims 1 to 7, wherein the marking element is an RFID chip.

11. A method according to claim 10, wherein marking elements are applied to the raw material (6) in the basic step, wherein said raw material (6) and said marking elements are transported to said shaping unit (1) during said basic step, wherein said shaping unit (1) forms said raw material (6) with markings elements, to said plate shaped material, wherein said formed plate shaped material extends according to a length direction, wherein said marking elements are applied to the raw material (6) in said basic step in such a way that the marking elements in the plate shaped material extend successively one after the other according to the length direction.

12. A method according to any of the preceding claims, wherein substantially each board is linked to a respective ID tag or comprises a respective ID tag.

13. A method according to any of the preceding claims, wherein the boards are wood based boards, such as wood fiber boards, oriented strand boards or particle boards.

14. A method according to any of the preceding claims, wherein one or more production units are present to perform said productions steps, wherein a said production unit is capable of coupling to said ID tag.

15. A method according to any of the preceding paragraphs, wherein said ID tags comprise input values relating to productions steps, wherein said input values are added by an operator which participates in the production of said boards.
